# EUROPEAN PATENT APPLICATION

(11) **EP 2 610 659 A1**
(43) Date of publication of application: **03.07.2013**
(21) Application number: 12199538.5
(22) Date of filing: 27.12.2012
(51) Int. Cl.: G02B 6/42

(54) **Optical path coupling device, optical path coupling apparatus and optical path coupling method**

(30) Priority: 27.12.2011 CN 201110443878
(71) Applicant: Huawei Technologies Co., Ltd., Longgang District, Shenzhen Guangdong 518129 (CN)
(72) Inventor: Liu, Jinzhou, 518129 Shenzhen (CN)
(74) Representative: Isarpatent

(57) **Abstract**

The present invention provides an optical path coupling device. The device includes a light beam collimating element (121) and a light beam concentrating element (122). The light beam collimating element includes a first focus (1213), a first optical axis (1212) and a light concentrating surface (1211); the light concentrating surface receives incident light emitted from a position of a first focus and collimates the incident light into collimated light beams (150) which are transmitted along the first optical axis. The light beam concentrating element (122) includes a second focus (1223), a second optical axis (1222) and a reflective concave surface (1221); the second optical axis is disposed in parallel with and at a preset distance away from the first optical axis; the reflective concave surface (1221) is disposed obliquely relative to the first optical axis, and the reflective concave surface receives the collimated light beams and reflects and concentrates the collimated light beams to a position of the second focus.

## Description

### FIELD OF THE INVENTION

The present invention relates to the field of optical communication technologies, and in particular, to an optical path coupling device, an optical path coupling apparatus and an optical path coupling method, which couple light from a light emitter to an optical fiber or an optical waveguide.

### BACKGROUND OF THE INVENTION

In optical fiber communication technologies, it is needed to first convert an electrical signal to an optical signal through a light emitter (such as a semiconductor laser); and in an application of the optical fiber communication technologies, it is needed to first convert an electrical signal to an optical signal through a light emitting apparatus (such as a semiconductor laser), and then couple the optical signal to an optical fiber for transmitting the optical signal or a planar optical waveguide for modulating the optical signal (such as a thin-film optical waveguide or a strip-shaped optical waveguide).

In general, design of an optical path coupling apparatus is to make a light emitting apparatus, all optical devices and an optical fiber align along an optical path in a straight line. An advantage of this alignment solution is that an optical component is relatively simple and may be made by using only one simple optical element, such as a convex lens. However, this design solution requires that the optical fiber and the light emitting apparatus be aligned along the optical path strictly, and each optical path coupling device has to be designed meticulously, so that effective optical path coupling can be achieved.

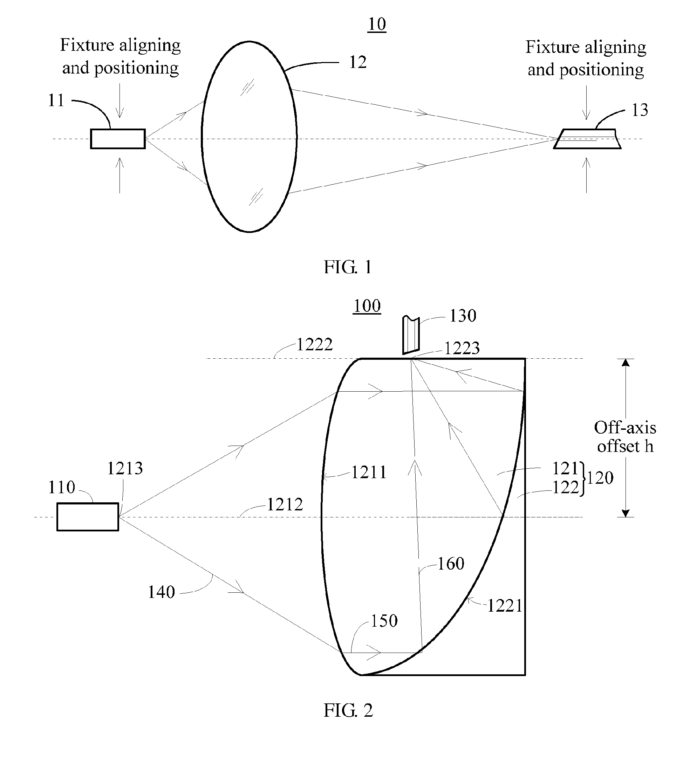

FIG. 1 is a schematic structural diagram of an optical path coupling apparatus in the prior art. As shown in FIG. 1, the optical path coupling apparatus 10 includes a laser 11, a lens 12 and an optical fiber 13, which are arranged along a straight line. Scattered light beams emitted by the laser 11 are concentrated to the optical fiber 13 via the lens 12. To achieve high coupling efficiency, the lens 12 needs to adopt an aspherical lens with high precision, and tolerance in design of the lens is required to be quite strict, so difficulty of a production process is high. Furthermore, because a section of the optical fiber 13 is very small, once the concentrated beams offset slightly, optical path coupling efficiency is affected seriously; therefore, this optical path coupling manner has strict requirements regarding relative positions of the laser 11, the lens 12 and the optical fiber 13; an optical axis center between the laser 11 and the lens 12, an optical axis center between the lens 12 and the optical fiber 13, and spacing between elements have to be controlled precisely; and in a processing and manufacturing process, the laser 11, the lens 12 and the optical fiber 13 need to be positioned through fixtures with high precision, which increases production difficulty and manufacturing costs.

In view of this, it is needed to provide an optical path coupling device which is simpler, more convenient and more effective, so as to reduce assembly difficulty and manufacturing costs of optical path coupling between optical elements.

### SUMMARY OF THE INVENTION

A technical problem to be solved primarily by the present invention is to provide an optical path coupling device, an optical path coupling apparatus and its optical path coupling method, so as to reduce assembly difficulty and manufacturing costs of optical path coupling between optical elements.

To solve the foregoing technical problem, a technical solution adopted by the present invention is to provide an optical path coupling device, including a light beam collimating element and a light beam concentrating element. The light beam collimating element includes a first focus, a first optical axis and a light concentrating surface; the light concentrating surface receives incident light emitted from a position of the first focus and collimates the incident light into collimated light beams which are transmitted along the first optical axis. The light beam concentrating element includes a second focus, a second optical axis and a reflective concave surface; the second optical axis is disposed in parallel with and at a preset distance away from the first optical axis; the reflective concave surface is disposed obliquely relative to the first optical axis, and the reflective concave surface receives the collimated light beams and reflects and concentrates the collimated light beams to a position of the second focus.

According to an exemplary embodiment of the present invention, the collimated light beams are parallel to the first optical axis.

According to an exemplary embodiment of the present invention, a shape of a light beam envelope of the collimated light beams on a section perpendicular to the first optical axis includes one of a circle, an ellipse and a rectangle or a combination thereof.

According to an exemplary embodiment of the present invention, the light beam collimating element is a condenser lens; the first focus is an object-side focus of the condenser lens; the first optical axis is an optical axis of the condenser lens; and the light concentrating surface is an object-side convex surface of the condenser lens.

According to an exemplary embodiment of the present invention, the condenser lens includes one of a spherical lens, an aspherical lens, a cylindrical lens, a gradient-index lens, a plano-convex lens group or a concavo-convex lens group.

According to an exemplary embodiment of the present invention, the light beam concentrating element is a concave reflector; the second focus is a focus of the concave reflector; the second optical axis is an optical axis of the concave reflector; and the reflective concave surface is a concave surface of the concave reflector.

According to an exemplary embodiment of the present invention, the concave reflector includes one of a spherical concave mirror, a parabolic concave mirror or a hyperbolic concave mirror.

According to an exemplary embodiment of the present invention, the light beam collimating element and the light beam concentrating element are disposed on the first optical axis separately.

According to an exemplary embodiment of the present invention, the light beam collimating element further includes a light outgoing surface, and the light outgoing surface and the reflective concave surface of the light beam concentrating element are bonded to each other.

According to an exemplary embodiment of the present invention, the optical path coupling device is a compound lens, and the compound lens includes a concentrated light collimating portion and a reflecting portion; the light beam collimating element is the concentrated light collimating portion of the compound lens, the light beam concentrating element is the reflecting portion of the compound lens; the first focus is an object-side focus of the concentrated light collimating portion; the first optical axis is an optical axis of the concentrated light collimating portion; the light concentrating surface is an object-side convex surface of the concentrated light collimating portion; the second focus is a focus of the reflecting portion; the second optical axis is an optical axis of the reflecting portion; and the reflective concave surface is an outer concave surface of the reflecting portion, and a reflecting film is disposed on the outer concave surface.

According to an exemplary embodiment of the present invention, an antireflection film is disposed on the light concentrating surface; and a reflecting film is disposed on the reflective concave surface.

To solve the foregoing technical problem, another technical solution adopted by the present invention is to provide an optical path coupling apparatus, including a light emitting device, a light receiving device and the optical path coupling device in the foregoing exemplary embodiments of the present invention; the light emitting device is located at the position of the first focus of the optical path coupling device, and the light receiving device is located at the position of the second focus of the optical path coupling device.

According to an exemplary embodiment of the present invention, the optical path coupling apparatus further includes a pedestal, the pedestal includes a bearing platform, and the optical path coupling device is fixedly disposed on the bearing platform.

According to an exemplary embodiment of the present invention, the pedestal further includes an adjusting screw, and the adjusting screw is connected to the bearing platform to adjust a horizontal pitch angle, a vertical pitch angle or a combination thereof.

According to an exemplary embodiment of the present invention, the light emitting device includes one of a laser, a light emitting diode or a spotlight.

According to an exemplary embodiment of the present invention, the light receiving device includes one of an optical fiber, a thin-film optical waveguide or a strip-shaped optical waveguide.

To solve the foregoing technical problem, another technical solution adopted by the present invention is to provide an optical path coupling method, including steps of: emitting incident light at a position of a first focus on a first optical axis; receiving the incident light via a light concentrating surface, and collimating the incident light into collimated light beams which are transmitted along the first optical axis; and receiving the collimated light beams via a reflective concave surface that is disposed obliquely relative to the first optical axis, and reflecting and concentrating the collimated light beams to a position of a second focus of a second optical axis; where an optical axis of the reflective concave surface is the second optical axis, and the second optical axis is disposed in parallel with and at a preset distance away from the first optical axis.

According to an exemplary embodiment of the present invention, the collimated light beams are parallel to the first optical axis.

According to an exemplary embodiment of the present invention, a shape of a light beam envelope of the collimated light beams on a section perpendicular to the first optical axis includes one of a circle, an ellipse and a rectangle or a combination thereof.

Beneficial effects of the present invention are that, by cooperating of the light beam collimating element and the reflective concave surface of the light beam concentrating element with each other, the optical path coupling device of the present invention implements large-angle off-axis light focusing, and reduces the assembly difficulty and the manufacturing costs of the optical path coupling between the optical elements.

### BRIEF DESCRIPTION OF THE DRAWINGS

FIG. 1 is a schematic structural diagram of an optical path coupling apparatus in the prior art;
FIG. 2 is a schematic sectional diagram of a first embodiment of an optical path coupling apparatus of the present invention along a plane on which a first optical axis and a second optical axis are located;
FIG. 3 is a schematic diagram of an optical path transmission principle of an optical path coupling apparatus of the present invention;
FIG. 4A to FIG. 4C are schematic diagrams of envelopes of collimated light beams of an optical path coupling device of the present invention;
FIG. 5 to FIG. 8 are schematic structural diagrams of second to fifth embodiments of an optical path coupling apparatus of the present invention respectively; and
FIG. 9 is a step flowchart of an optical path coupling method of the present invention.

### DETAILED DESCRIPTION OF THE EMBODIMENTS

The present invention is further illustrated in detail below with reference to accompanying drawings.

To make persons skilled in the art understand the technical solutions of the present invention more easily, a structure and a working principle of an optical path coupling apparatus of the present invention are first illustrated.

FIG. 2 is a schematic sectional diagram of a first embodiment of an optical path coupling apparatus of the present invention along a plane on which a first optical axis and a second optical axis are located. As shown in FIG. 2, an optical path coupling apparatus 100 of the present invention mainly includes a light emitting device 110, an optical path coupling device 120 and a light receiving device 130. The light emitting device 110 is located at an input focus of the optical path coupling device 120, configured to output light beams, and may be a laser, a light emitting diode or a spotlight. The optical path coupling device 120 receives the light beams output by the light emitting device 110, and couples the light beams to the light receiving device 130; the light receiving device 130 is located at an output focus of the optical path coupling device 120, configured to transmit the light beams, and may be an optical fiber, a thin-film optical waveguide or a strip-shaped optical waveguide.

The optical path coupling device 120 includes a light beam collimating element 121 and a light beam concentrating element 122. The light beam collimating element 121 includes a light concentrating surface 1211, a first optical axis 1212 and a first focus 1213; the first focus 1213 is the input focus of the optical path coupling device 120; the light concentrating surface 1211 receives incident light 140 that is emitted by the light emitting device 110 at a position of the first focus 1213, and collimates the incident light 140 into collimated light beams 150 which are transmitted along the first optical axis 1212. Further, an antireflection film is disposed on the light concentrating surface 1211, to increase transmittance when the incident light 140 passes through the light concentrating surface 1211.

The light beam concentrating element 122 includes a reflective concave surface 1221, a second optical axis 1222 and a second focus 1223. In the present invention, the second optical axis 1222 is at a preset distance away from the first optical axis 1212, the preset distance is an off-axis offset h, and an off-axis focusing function of the light beam concentrating element 122 is fulfilled just because of existence of the off-axis offset h between the second optical axis 1222 and the first optical axis 1212. The reflective concave surface 1221 is disposed obliquely relative to the first optical axis 1212, and is configured to receive the collimated light beams 150 and to reflect and concentrate the collimated light beams 150 to a position of the second focus 1223. The second focus 1223 is the output focus of the optical path coupling device 120; the light receiving device is located at the second focus 1223 to receive concentrated light beams 160. Further, a reflecting film is disposed on the reflective concave surface 1221 to increase a reflectivity.

The optical path coupling apparatus 100 of the present invention and its core optical path coupling device 120 are briefly described above; to make persons skilled in the art understand the technical solutions of the present invention more deeply, its optical path transmission principle is illustrated below, so as to describe an obtaining process of structural parameters of the optical path coupling device 120 of the present invention.

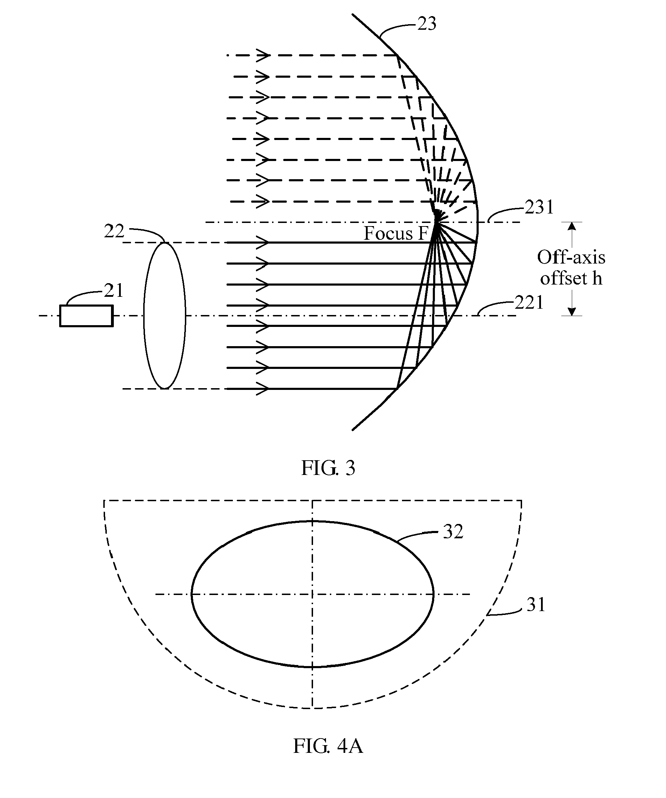

FIG. 3 is a schematic diagram of an optical path transmission principle of an optical path coupling apparatus of the present invention. As shown in FIG. 3, a light source 21 is located at a focus of a condenser lens 22, and light beams emitted by the light source 21 are collimated into parallel light beams parallel to an optical axis 221 of the condenser lens 22 by the condenser lens 22; a reflective concave mirror 23 concentrates the parallel light beams at a focus F. An optical axis 231 of the reflective concave mirror 23 is an axisymmetric center of a reflective surface, parallel to and an off-axis offset h away from the optical axis 221; the reflective concave mirror 23 is part of the reflective surface which deviates from the axisymmetric center. The reflective concave mirror 23 includes a spherical concave mirror, a parabolic concave mirror or a hyperbolic concave mirror. Particularly, when the reflective concave mirror 23 is a parabolic mirror, it can be known, from geometric optical properties of the parabolic mirror, that for any ray parallel to a main axis incident to the parabolic mirror, its reflected ray has to pass through a focus of the parabolic mirror; therefore, in an exemplary embodiment of the present invention, as shown in FIG. 2, the collimated light beams 150 are parallel to the first optical axis 1212, so as to ensure ray concentrating quality and ray coupling efficiency by adopting the parabolic mirror. As shown in FIG. 3, as long as the off-axis offset h between the optical axis 221 of the condenser lens 22 and the optical axis 231 of the reflective concave mirror 23 is determined, actually needed structural parameters of the reflective concave mirror 23 on a plane on which the first optical axis and the second optical axis are located may be determined through a range of parallel light beams. Further, by rotating a parabolic section of the reflective concave mirror 23 shown in FIG. 3 around the optical axis 221, a projection shape along a direction of the optical axis 221 may be obtained, and then in combination with an envelope of the collimated light beams, structural parameters of the reflective concave mirror 23 perpendicular to the plane on which the first optical axis and the second optical axis are located may be further obtained.

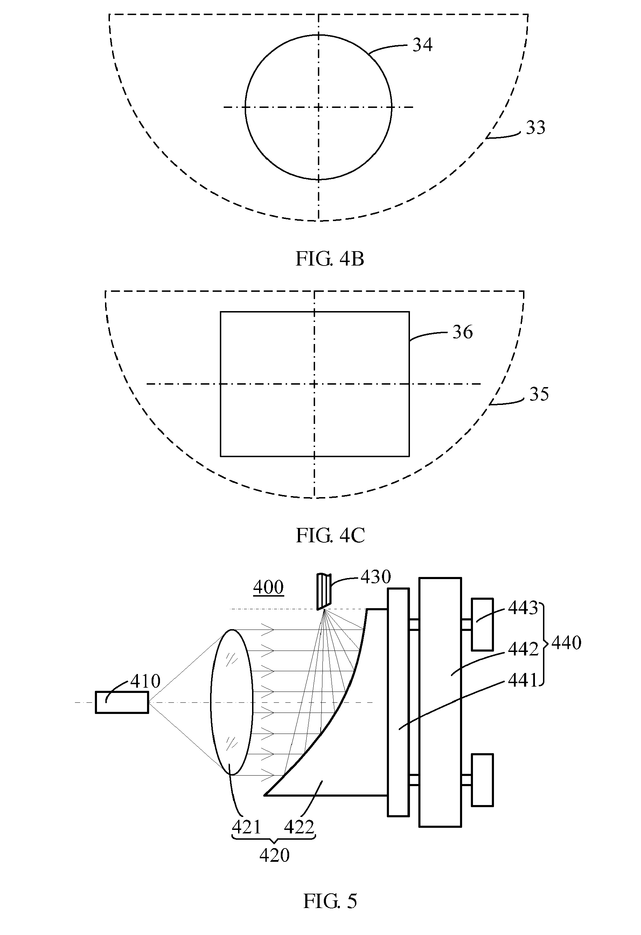

FIG. 4A to FIG. 4C are schematic diagrams of envelopes of collimated light beams of an optical path coupling device of the present invention. FIG. 4A is a schematic diagram of an envelope of collimated light beams of the optical path coupling device when the light emitting device 110 is a multimode laser; the envelope 32 of the collimated light beams is elliptical, and a dotted line 31 in the figure is a projection shape of the reflective concave surface in a direction of an optical axis. FIG. 4B is a schematic diagram of an envelope of collimated light beams of the optical path coupling device when the light emitting device 110 is a single-mode laser; the envelope 34 of the collimated light beams is circular, and a dotted line 33 in the figure is a projection shape of the reflective concave surface in a direction of an optical axis. FIG. 4C is a schematic diagram of an envelope of collimated light beams of the optical path coupling device when the light emitting device 110 is a light emitting diode; the envelope 36 of the collimated light beams is rectangular, and a dotted line 35 in the figure is a projection shape of the reflective concave surface in a direction of an optical axis.

In combination with the foregoing description of FIG. 3 and FIG. 4A to FIG. 4C, effective reflection of the collimated light beams may be implemented as long as an outline of the reflective concave surface of the optical path coupling apparatus is larger than the envelope of the collimated light beams.

Other embodiments of the present invention are described below one by one.

FIG. 5 is a schematic structural diagram of a second embodiment of an optical path coupling apparatus of the present invention. As shown in FIG. 5, an optical path coupling apparatus 400 includes a laser 410, an optical path coupling device 420 and an optical fiber 430. The optical path coupling device 420 further includes a light beam collimating element 421 and a light beam concentrating element 422; the light beam collimating element 421 and the light beam concentrating element 422 are disposed separately, and the two are disposed on a first optical axis of the light beam collimating element 421 and away from each other at a certain distance. The light beam collimating element 421 is a condenser lens; a first focus is an object-side focus of the condenser lens; the first optical axis is an optical axis of the condenser lens; and a light concentrating surface is an object-side convex surface of the condenser lens. The condenser lens may be selected from a spherical lens, an aspherical lens, a cylindrical lens, a gradient-index lens, a plano-convex lens group or a concavo-convex lens group. The light beam concentrating element 422 is a concave reflector; a second focus is a focus of the concave reflector; a second optical axis is an optical axis of the concave reflector; and a reflective concave surface is a concave surface of the concave reflector. The optical path coupling apparatus 400 further includes a pedestal 440, and the pedestal includes a bearing platform 441, a base plate 442 and an adjusting screw 443; the optical path coupling device 420 is fixedly disposed on the bearing platform 441. The adjusting screw 443 is connected to the bearing platform 441 to adjust a horizontal pitch angle, a vertical pitch angle or a combination thereof.

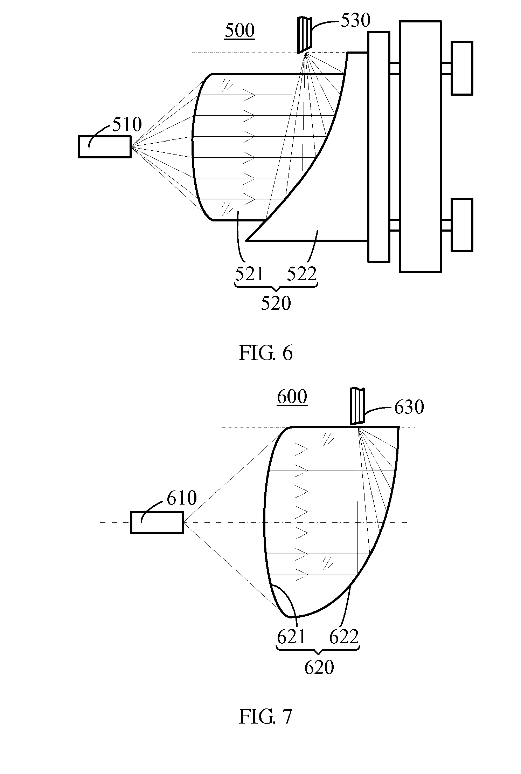

FIG. 6 is a schematic structural diagram of a third embodiment of an optical path coupling apparatus of the present invention. As shown in FIG. 6, an optical path coupling apparatus 500 includes a laser 510, an optical path coupling device 520 and an optical fiber 530. The optical path coupling device 520 further includes a light beam collimating element 521 and a light beam concentrating element 522; an light outgoing surface of the light beam collimating element 521 and a reflective concave surface of the light beam concentrating element 522 are bonded to each other, thereby preventing reflection loss of light beams at a medium-air interface and improving optical path coupling efficiency.

FIG. 7 is a schematic structural diagram of a fourth embodiment of an optical path coupling apparatus of the present invention. As shown in FIG. 7, an optical path coupling apparatus 600 includes a laser 610, an optical path coupling device 620 and an optical fiber 630. In this embodiment, the optical path coupling device 620 is a compound lens, and the compound lens includes a concentrated light collimating portion 621 and a reflecting portion 622; a first focus is an object-side focus of the concentrated light collimating portion 621; a first optical axis is an optical axis of the concentrated light collimating portion 621; a light concentrating surface is an object-side convex surface of the concentrated light collimating portion 621; a second focus is a focus of the reflecting portion 622; a second optical axis is an optical axis of the reflecting portion 622; a reflective concave surface is an outer concave surface of the reflecting portion 622, and a reflecting film is disposed on the outer concave surface.

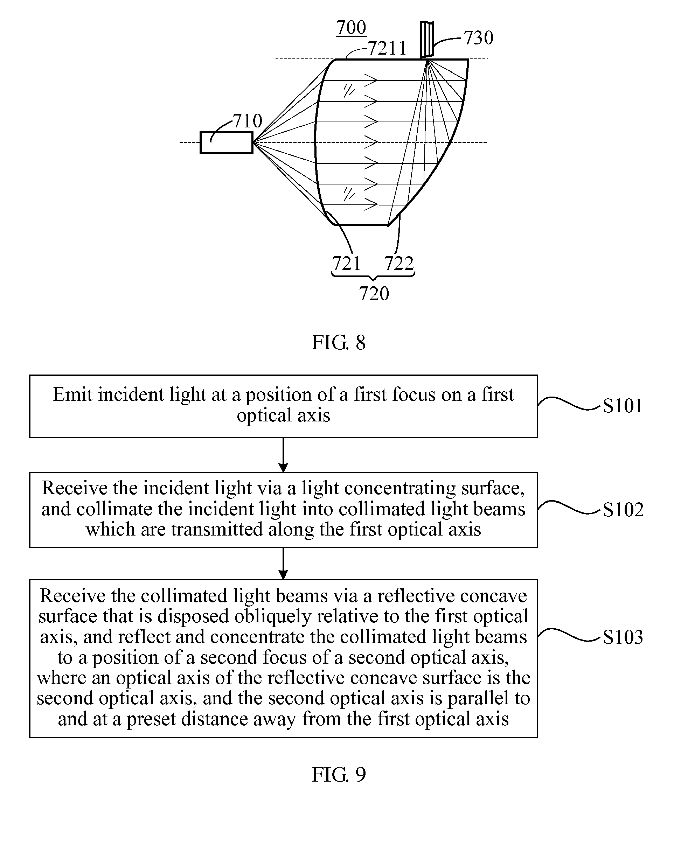

FIG. 8 is a schematic structural diagram of a fifth embodiment of an optical path coupling apparatus of the present invention. An optical path coupling apparatus 700 includes a laser 710, an optical path coupling device 720 and an optical fiber 730. The optical path coupling device 720 is a compound lens, and the compound lens includes a concentrated light collimating portion 721 and a reflecting portion 722; a difference from the fourth embodiment of the present invention is that the concentrated light collimating portion 721 includes a columnar light guide portion 7211, and the optical path coupling device 720 may be clamped and fixed conveniently through the columnar light guide portion 7211.

FIG. 9 is a step flowchart of an optical path coupling method of the present invention. As shown in FIG. 9, an optical path coupling method of the present invention includes the following steps:
Step S101: Emit incident light at a position of a first focus on a first optical axis.
Step S102: Receive the incident light via a light concentrating surface, and collimate the incident light into collimated light beams which are transmitted along the first optical axis.
Step S103: Receive the collimated light beams via a reflective concave surface that is disposed obliquely relative to the first optical axis, and reflect and concentrate the collimated light beams to a position of a second focus of a second optical axis, where an optical axis of the reflective concave surface is the second optical axis, and the second optical axis is parallel to and at a preset distance away from the first optical axis.

In an exemplary embodiment, the collimated light beams in step S102 are parallel to the first optical axis.

With reference to what is shown in FIG. 2, in an exemplary embodiment, the collimated light beams are transmitted in parallel with the first optical axis to the reflective concave surface; a shape of a light beam envelope of the collimated light beams on a section perpendicular to the first optical axis includes one of a circle, an ellipse and a rectangle or a combination thereof.

In the foregoing embodiments, by cooperating of the light beam collimating element and the reflective concave surface of the light beam concentrating element, the optical path coupling device of the present invention implements large-angle off-axis light focusing, and reduces assembly difficulty and manufacturing costs of optical path coupling between optical elements.

The foregoing is only embodiments of the present invention and is not intended to limit the patent scope of the present invention. Any equivalent structure or equivalent procedure transformation made by using the specification and content of the accompanying drawings of the present invention, or direct or indirect applications in other related technical fields shall all fall within the patent protection scope of the present invention.

## Claims

1. An optical path coupling device, **characterized by** comprising:
a light beam collimating element, which comprises a first focus, a first optical axis and a light concentrating surface, wherein the light concentrating surface receives incident light emitted from a position of the first focus and collimates the incident light into collimated light beams which are transmitted along the first optical axis; and
a light beam concentrating element, which comprises a second focus, a second optical axis and a reflective concave surface, wherein the second optical axis is disposed in parallel with and at a preset distance away from the first optical axis, the reflective concave surface is disposed obliquely relative to the first optical axis, and the reflective concave surface receives the collimated light beams and reflects and concentrates the collimated light beams to the second focus.

2. The optical path coupling device according to claim 1, wherein the collimated light beams are parallel to the first optical axis.

3. The optical path coupling device according to claim 1, wherein a shape of a light beam envelope of the collimated light beams on a section perpendicular to the first optical axis comprises one of a circle, an ellipse and a rectangle or a combination thereof.

4. The optical path coupling device according to claim 1, wherein the light beam collimating element is a condenser lens; the first focus is an object-side focus of the condenser lens; the first optical axis is an optical axis of the condenser lens; and the light concentrating surface is an object-side convex surface of the condenser lens.

5. The optical path coupling device according to claim 1, wherein the condenser lens comprises one of a spherical lens, an aspherical lens, a cylindrical lens, a gradient-index lens, a plano-convex lens group or a concavo-convex lens group.

6. The optical path coupling device according to claim 1, wherein the light beam concentrating element is a concave reflector; the second focus is a focus of the concave reflector; the second optical axis is an optical axis of the concave reflector; and the reflective concave surface is a concave surface of the concave reflector.

7. The optical path coupling device according to claim 1, wherein the concave reflector comprises one of a spherical concave mirror, a parabolic concave mirror or a hyperbolic concave mirror.

8. The optical path coupling device according to claim 1, wherein the light beam collimating element and the light beam concentrating element are disposed on the first optical axis separately.

9. The optical path coupling device according to claim 1, wherein the light beam collimating element further comprises a light outgoing surface, and the light outgoing surface and the reflective concave surface of the light beam concentrating element are bonded to each other.

10. The optical path coupling device according to claim 1, wherein the optical path coupling device is a compound lens, the compound lens comprises a concentrated light collimating portion and a reflecting portion; the light beam collimating element is the concentrated light collimating portion of the compound lens, the light beam concentrating element is the reflecting portion of the compound lens; the first focus is an object-side focus of the concentrated light collimating portion; the first optical axis is an optical axis of the concentrated light collimating portion; the light concentrating surface is an object-side convex surface of the concentrated light collimating portion; the second focus is a focus of the reflecting portion; the second optical axis is an optical axis of the reflecting portion; the reflective concave surface is an outer concave surface of the reflecting portion, and a reflecting film is disposed on the outer concave surface.

11. The optical path coupling device according to claim 1, wherein an antireflection film is disposed on the light concentrating surface; and a reflecting film is disposed on the reflective concave surface.

12. An optical path coupling apparatus, wherein the optical path coupling apparatus comprises a light emitting device, a light receiving device and the optical path coupling device according to any one of claims 1 to 11; the light emitting device is located at the position of the first focus of the optical path coupling device, and the light receiving device is located at a position of the second focus of the optical path coupling device.

13. The optical path coupling apparatus according to claim 12, wherein the optical path coupling apparatus further comprises a pedestal, the pedestal comprises a bearing platform, and the optical path coupling device is fixedly disposed on the bearing platform.

14. The optical path coupling apparatus according to claim 13, wherein the pedestal further comprises an adjusting screw, and the adjusting screw is connected to the bearing platform to adjust a horizontal pitch angle, a vertical pitch angle or a combination thereof.

15. The optical path coupling apparatus according to claim 12, wherein the light emitting device comprises one of a laser, a light emitting diode or a spotlight.

16. The optical path coupling apparatus according to claim 12, wherein the light receiving device comprises one of an optical fiber, a thin-film optical waveguide or a strip-shaped optical waveguide.

17. An optical path coupling method, **characterized by** comprising steps of:
emitting incident light from a position of a first focus on a first optical axis; and
receiving the incident light via a light concentrating surface, and collimating the incident light into collimated light beams which are transmitted along the first optical axis; and receiving the collimated light beams via a reflective concave surface that is disposed obliquely relative to the first optical axis, and reflecting and concentrating the collimated light beams to a position of a second focus of a second optical axis, wherein an optical axis of the reflective concave surface is the second optical axis, and the second optical axis is disposed in parallel with and at a preset distance away from the first optical axis.

18. The optical path coupling method according to claim 17, wherein the collimated light beams are parallel to the first optical axis.

19. The optical path coupling method according to claim 17, wherein a shape of a light beam envelope of the collimated light beams on a section perpendicular to the first optical axis comprises one of a circle, an ellipse and a rectangle or a combination thereof.

## Amended claims

### Amended claims in accordance with Rule 137(2) EPC.

**1.** An optical path coupling device (120, 620), **characterized by** comprising:
a light beam collimating element (121), which comprises a first focus (1213), a first optical axis (1212) and a light concentrating surface (1211), wherein the light concentrating surface (1211) receives incident light emitted from a position of the first focus (1213) and collimates the incident light into collimated light beams which are transmitted along the first optical axis (1212); and
a light beam concentrating element (122), which comprises a second focus (1223), a second optical axis (1222) and a reflective concave surface (1221), wherein the second optical axis (1222) is disposed in parallel with and at a preset distance away from the first optical axis (1212), the reflective concave surface (1221) is disposed obliquely relative to the first optical axis (1212), and the reflective concave surface (1221) receives the collimated light beams and reflects and concentrates the collimated light beams to the second focus (1223),;
**characterized by** that the optical path coupling device (120, 620) is a compound lens, comprising a concentrated light collimating portion (621) and a reflecting portion (622); the light beam collimating element (121) is the concentrated light collimating portion (621) of the compound lens, and the light beam concentrating element (122) is the reflecting portion (622) of the compound lens;
the first focus (1213) is an object-side focus of the concentrated light collimating portion (621); the first optical axis (1212) is an optical axis of the concentrated light collimating portion (621); the light concentrating surface (1211) is an object-side convex surface of the concentrated light collimating portion (621); the second focus (1223) is a focus of the reflecting portion (622); the second optical axis (1222) is an optical axis of the reflecting portion (622); the reflective concave surface (1221) is an outer concave surface of the reflecting portion (622), and a reflecting film is disposed on the outer concave surface.

**2.** The optical path coupling device (120, 620) according to claim 1, wherein the collimated light beams are parallel to the first optical axis (1212).

**3.** The optical path coupling device (120, 620) according to claim 1, wherein a shape of a light beam envelope of the collimated light beams on a section perpendicular to the first optical axis (1212) comprises one of a circle, an ellipse and a rectangle or a combination thereof.

**4.** The optical path coupling device (120, 620) according to claim 1, wherein the light beam collimating element (121) is a condenser lens; the first focus (1213) is an object-side focus of the condenser lens; the first optical axis (1212) is an optical axis of the condenser lens; and the light concentrating surface (1211) is an object-side convex surface of the condenser lens.

**5.** The optical path coupling device (120, 620) according to claim 4, wherein the condenser lens comprises one of a spherical lens, an aspherical lens, a cylindrical lens, a gradient-index lens, a plano-convex lens group or a concavo-convex lens group.

**6.** The optical path coupling device (120, 620) according to claim 1, wherein the light beam concentrating element (122) is a concave reflector; the second focus (1223) is a focus of the concave reflector; the second optical axis (1222) is an optical axis of the concave reflector; and the reflective concave surface (1221) is a concave surface of the concave reflector.

**7.** The optical path coupling device (120, 620) according to claim 6, wherein the concave reflector comprises one of a spherical concave mirror, a parabolic concave mirror or a hyperbolic concave mirror.

**8.** The optical path coupling device (120, 620) according to claim 1, wherein an antireflection film is disposed on the light concentrating surface (1211).

**9.** An optical path coupling apparatus (100), wherein the optical path coupling apparatus (100) comprises a light emitting device (110), a light receiving device (130) and the optical path coupling device (120, 620) according to any one of claims 1 to 8; the light emitting device (110) is located at the position of the first focus (1213) of the optical path coupling device (120, 620), and the light receiving device (130) is located at a position of the second focus (1223) of the optical path coupling device (120, 620).

**10.** The optical path coupling apparatus (100) according to claim 9, wherein the optical path coupling apparatus (100) further comprises a pedestal (440), the pedestal (440) comprises a bearing platform (441), and the optical path coupling device (120, 620) is fixedly disposed on the bearing platform (441).

**11.** The optical path coupling apparatus (100) according to claim 12, wherein the pedestal (440) further comprises an adjusting screw (443), and the adjusting screw (443) is connected to the bearing platform (441) to adjust a horizontal pitch angle, a vertical pitch angle or a combination thereof.

**12.** The optical path coupling apparatus (100) according to claim 9, wherein the light emitting device (110) comprises one of a laser, a light emitting diode or a spotlight.

**13.** The optical path coupling apparatus (100) according to claim 9, wherein the light receiving device (130) comprises one of an optical fiber, a thin-film optical waveguide or a strip-shaped optical waveguide.
